# EUROPEAN PATENT SPECIFICATION

(11) **EP 0 480 669 B1**
(45) Date of publication and mention of the grant of the patent: **10.01.1996**
(21) Application number: 91309203.7
(22) Date of filing: 08.10.1991
(51) Int. Cl.: A23L 2/00

(54) **Beverage process and composition**
Verfahren und Zusammensetzung zur Herstellung von Getränken
Procédé et composition pour la préparation de boissons

(30) Priority: 09.10.1990 GB 9021927
(43) Date of publication of application: 15.04.1992
(73) Proprietor: WILLIAM GRANT & SONS LIMITED, Dufftown Banffshire Scotland (GB)
(72) Inventor: Wilkin, George Desmond, The Girvan Distillery, Ayrshire, KA26 9PT, Scotland (GB); Webber, M. A., The Girvan Distillery, Ayrshire, KA26 9PT, Scotland (GB)
(74) Representative: King, James Bertram

(56) References cited:
- EP-A- 0 181 190
- US-A- 4 497 842
- DATABASE WPIL Section Ch, Week 8930, Derwent Publications Ltd., London, GB; Class D13, AN 89-218511(30)
- CHEMICAL ABSTRACTS, vol. 91, 1979, Columbus, Ohio, US; abstract no. 138867y, T. ORISHIGE ET AL. 'Japanese apricot liqueur' page 499 ;column 1 ;

## Description

This invention is concerned with processes for making a beverage or an ingredient for use in a beverage. More specifically, the invention is directed to flavoured beverages which comprise at least one ingredient obtainable by the said process.

The principal field of application of the invention is the manufacture of aqueous-alcoholic flavoured drinks which may or may not be subsequently diluted with water or other diluents such as soda, tonic and the like prior to consumption. The final alcohol concentration of the beverage may range, for example, from 5 to 35% by weight.

The term "flavoured component" as used throughout the specification is meant to include distinctively flavoured products suitable for use in potable beverages and which have characteristic and recognisable flavours. The physical form of the flavour component, or components in the case of a mixture, is not especially important although as will become apparent one preferred form is an oil which has been obtained by alcohol-extraction. Examples of flavour components will also be described generally and specifically.

Known aqueous, including aqueous-alcohol based, fruit drinks contain fruit juice concentrates and/or water soluble flavourings for conferring the required flavour. Some of these flavourings can have unpleasant 'cooked' off-tones making them unattractive. Consumers are becoming increasingly aware of synthetic additives in drinks and have created a demand for drinks based on the genuine basic ingredient. Consequently, there is a need to supply potable beverages which are based on naturally occurring products and which do not contain synthetically manufactured flavourings. There is furthermore an extremely limited variety of flavoured drinks available to the consumer. The vast majority of beverages available are fruit drinks based on a single fruit or mixture of fruits. The consumer therefore has less choice available when selecting beverage products. In known beverage making processes there is transfer of flavour from a water-immiscible phase (e.g. oil) to an aqueous flavour vehicle by way of tinctures extensively made.

Within the present technical field it is known that high energy demanding mechanisms can be used as counter-current extractors in the above transfer operation. They work by physically shearing the 'oil' into small globules. Within any particular extractor a greater physical force will produce a smaller globule.

The desired effect is to optimise the rate of flavour exchange. The emulsion so formed must then be separated into its two original phases. Very often emulsions formed using this extractor technique are stable and present difficulties in separation.

A further known method of effecting flavour transfer is by using the technique of tinctures. Basically, this is quite similar to the above mechanical extractor technique but involves tediously shaking and/or stirring, separating the oil and re-extracting to transfer as much flavour as possible. This technique is not only tedious but also inefficient.

It is from a consideration of the shortcomings of known beverages which has led to the development of the present invention which is not limited to the field of fruit based drinks.

As is disclosed in EP 0181190, membrane filtration can be used to clarify certain emulsions used for beverage production. Another example of the common use of membranes is that given by treatment of milk. It is also well known that perlite and diatomaceous earth can be used for clarification by filtration. However many industrial filtrations require the use of extremely high capital equipment such as rotary and vacuum filters. We have now discovered that the use of filter aids in a static filter can succeed in not only clarifying but also enhancing flavour in such difficult emulsions if the filter aids are specifically selected and used in the manner indicated below. The selection of such materials provides a surprising improvement which would not be expected.

According to this invention there is provided an improvement in a process for making a beverage or an ingredient for a beverage from one or more flavoured components comprising an alcohol-soluble oil wherein an alcoholic solution of the flavoured component(s) is diluted with water or a water/alcohol mixture to form an emulsion which is filtered through a static filter system to separate the emulsion, and the filtrate collected as the beverage or as an ingredient for a beverage, the improvement comprising the use of a static filter system including a composite filter bed incorporating solid filter aids A and B to be used in a sequence A first and then B, filter aid B being more compact and having a finer filtering action than A, wherein filter aid A comprises perlite, and wherein filter aid B comprises diatomaceous earth.

The emulsion is preferably formed whilst mixing at low shear during dilution.

The emulsion formed is preferably pumped through the filter system under pressure.

Further alcohol may be subsequently added to the filtrate and/or one or more other flavoured components may be added. A mixture of different flavoured components may be used in the process. Several ingredients, each obtained separately by the process, may be combined to form a beverage with attractive flavour.

It is preferred for convenience to use as flavoured component an alcohol-extracted oil of a characteristically flavoured product. Such oil may be 'an essential oil' in the sense that it consists of an alcohol-soluble essence or extract of the flavoured product from which it has been obtained. If the flavoured product to be employed is a fruit, herb, nut or spice the alcohol-extracted oil may be conveniently prepared by thoroughly mixing and/or crushing the product (or its pulp) in alcohol to form a solution and subsequently evaporating the alcohol to leave a concentrated, highly aromatic, oil. These alcohol-extracted oils have been found to be water-immiscible or at least contain a portion of water-immiscible oil. In embodiments of the invention utilising one or more alcohol-extracted oils the process still involves transfer of the flavour from a water-immiscible oil to a water-containing flavour vehicle. This technique can provide rapid and efficient transfer of flavour.

The flavoured component may comprise naturally occurring edible products known to confer a distinctive flavour, e.g. fruits whether or not citrus, berries, nuts, herbs, spices, seeds or an extract of one or more of the foregoing. For example, the process may be applied to citrus oils derived from citrus fruit such as lemon, orange or lime oils, berries, such as juniper berries, nuts such as walnut, pistachio or sesame nuts, seeds such as angelica seed or anise seed or essential oils whether or not alcohol-extracted such as angelica seed oil, aniseed oil, caraway oil, cinnamon bark oil, coriander oil, fennel oil, juniper berry oil, mandarin oil, aniseed oil, sesame oil, walnut oil or orange oil. The combination of two or more of any of the foregoing may be used in a beverage or as an ingredient therefor.

In one example of a beverage composition the flavoured components comprise coriander oil and angelica seed oil together with juniper berry oil. This combination of components may make a gin-flavoured drink without the lengthy operation of distillation normally used to produce the characteristic gin flavour.

In accordance with the invention the flavoured component(s) may contain an alcohol-soluble oil. Here the naturally occurring product itself may be employed, e.g. fruit, nut or berry preferably crushed to a pulp providing it is possible to form an alcoholic solution in which the alcohol-soluble oil is dissolved. The filtration step should remove any suspended solids but the filter may become quickly clogged. Here it is more preferable to use an oil as the basis for forming the alcoholic solution.

The final alcohol concentration may be, for example, 5 to 35%, preferably 10 to 25% by weight.

In the dilution step an emulsion is formed which may be dense and milky-white, consisting of roughly micron sized globules of oil suspended in the aqueous vehicle. This avoids using expensive mechanical extractors and can transfer the true, e.g. fruit flavour(s), from the oil extract with attractive efficiency. If a water/alcohol composition is used in the dilution step then it preferably comprises less than 70% by weight of alcohol. The dilution proportions will depend upon the final alcohol content required, for example a filtrate having an alcohol content of approximately 20% may be required. The alcohol content of the liquor from which the emulsion is formed is important in conditioning the final beverage flavour elements.

Before or after the dilution step other components may be added, for example sugar to increase sweetness.

The present invention is applicable to any flavoured product that contains an alcohol-extractable oil whether or not alcohol is subsequently used to extract it. For example, sesame nuts contain an oil component that may be extracted by exerting sufficient pressure. That oil would still be regarded as alcohol-extractable because it could also be obtained by the alcohol-extraction technique. The examples of oils noted above may or may not have been obtained by alcohol-extraction. In this case the oils will nevertheless comprise or consist of an alcohol-soluble oil suitable for undergoing the present process.

It is preferred for the filtration step to be carried out under pressure. For example, the emulsion may be pumped through the filter composite filter bed.

The filter system removes the oil globules quite unexpectedly since many emulsions would simply pass through and cause turbidity in the filtrate. In embodiments where citrus fruit oil extract is used, the filtrate obtained can have high genuine citrus flavour and aroma levels. We have found that the levels obtained can be higher than if the tedious and expensive tincture techniques are used.

Spices provide another useful source of flavoured component where their characteristic flavours can be imparted to relatively low alcohol concentration beverages.

An advantage of the process resides in the ability to produce clear, not turbid, drinks. This inherent advantage flows from using the emulsification flavour transfer technique.

The present process may be operated so as to minimise or overcome the disadvantages of the known flavour transfer techniques whilst simultaneously conferring comparatively higher detectable flavour levels.

The particular flavour imparted to the beverage product will be that level of flavour of the component or components which is/are in solution at the level of alcohol chosen as the final vehicle.

This provides the advantage of flavour selection by alcohol concentration and is considered to differentiate the present method from the use of high shear emulsion breaking techniques.

In order that the invention may be further illustrated and readily carried into effect embodiments thereof will now be presented by way of examples only.

### Example 1

To make one litre of aqueous/alcoholic citrus drink:-

### Materials

1. Neutral spirit - 96.3% ethanol, balance water
2. Fruit oil extract - citrus oil
3. Deionized water
4. Sugar syrup at 67° Brix
5. Composite filter bed.

### Method

1. Sufficient neutral spirit was measured into a container so that the final alcohol concentration would be 20%. In this example 208 ml neutral spirit as above was equivalent to 1 litre at 20% alcohol.
2. 3g of citrus oil extract was added to the high strength alcohol and dissolved therein.
3. 182 ml of deionized water was added to the solution and mixed to allow an emulsion to form.
4. 100 ml of sugar syrup was added to the emulsion whilst stirring.
5. The volume was checked and adjusted to one litre.
6. The oil extract was then separated by passing the emulsion through the composite filter bed.
7. The clear filtrate was collected which consisted of the final beverage having desirable levels of real citrus flavour and aroma.

### Example 2

Example 1 above was repeated but the quantity of neutral spirit was reduced and in step 3 above wine was added, not deionized water. Similar results were obtained. This illustrates an embodiment wherein a composition comprising water-alcohol mixture is used in the dilution step of the process.

The steps and materials used in the following examples correspond substantially with those of Example 1 with substitution of flavoured component(s).

### Example 3

Seed oil extract - aniseed oil was dissolved in 96% alcohol. On dilution to 50% alcohol a yellow emulsion was formed and the filtrate contained the characteristic flavour and aroma of aniseed. This example may be repeated with additional flavoured components and the quantities varied as required.

### Example 4

Fruit oil extract - lime oil was dissolved in 96% alcohol. When diluted into an alcoholic liquor at 20% alcohol concentration an emulsion was formed which on filtration gave a clear liquor with the characteristic aroma and flavour of limes.

### Example 5

Berry extract - juniper berry extract was dissolved in 96% alcohol. On dilution an emulsion formed and the filtrate contained the characteristic flavour of juniper berry.

This filtrate and starting material exemplify the introduction of a suitable ingredient into a beverage. The starting material may be admixed with other 'gin botanical' extracts whether or not the other extracts are capable of forming an emulsion on dilution.

A static filter system of 8 m² capacity was used in Examples 1 to 5 above; this system incorporates a composite filter bed supported by "Super 1000" cellulose filter sheets. The first pre-coat, i.e. filter aid A, is formed from "Clarcel Flow I" (sintered perlite) and the second pre-coat, i.e. filter aid B, is "Clarcel CBL" (diatomaceous earth). The solid materials A and B used are such that material B is more compact and has a finer filtering action than material A.

With this invention it is important to filter at the product alcohol strength in order to extract the desired flavour(s). In carrying out the process there is produced an emulsion of fine globules which optimise the desired flavour transfer. Therefore in order to prevent emulsion breakthrough and to assist in prevention of blockages of downstream filters a pre-coat filtration system is necessary. It is emphasised that normal spirit filtration uses sheet filters in contradistinction to the present invention.

## Claims

1. An improvement in a process for making a beverage or an ingredient for a beverage from one or more flavoured components comprising an alcohol-soluble oil wherein an alcoholic solution of the flavoured component(s) is diluted with water or a water/alcohol mixture to form an emulsion which is filtered through a static filter system to separate the emulsion, and the filtrate collected as the beverage or as an ingredient for a beverage, the improvement comprising the use of a static filter system including a composite filter bed incorporating solid filter aids A and B to be used in a sequence A first and then B, filter aid B being more compact and having a finer filtering action than A, characterised in that filter aid A comprises perlite, and wherein filter aid B comprises diatomaceous earth.

2. A process as claimed in Claim 1, wherein filter aid A comprises sintered perlite.

3. A process as claimed in any preceding claim, wherein the emulsion is formed whilst mixing at low shear during dilution.

4. A process as claimed in any preceding claim, wherein the emulsion formed is pumped through the filter system under pressure.

5. A process as claimed in any preceding claim, wherein further alcohol is subsequently added to the filtrate.

6. A process as claimed in any preceding claim, wherein the flavoured component(s) is (are) derived from one or more of the following: fruit, herb, nut, spice, seed or berry.

7. A process as claimed in any preceding claim, wherein the flavoured component(s) comprise(s) essential or alcohol extracted oil(s).

8. A process as claimed in any preceding claim, wherein the flavoured component(s) comprise(s) or is/are derived from one or more of the following: citrus oil, juniper berries, walnut, pistachio or sesame nuts, angelica or anise seeds, angelica seed oil, aniseed oil, caraway oil, cinnamon bark oil, coriander oil, fennel oil, juniper berry oil, mandarin oil, anise seed oil, sesame oil, walnut oil, lemon oil, orange oil, or lime oil.

9. A process as claimed in any one of Claims 1 to 7, wherein the flavoured component(s) comprise(s) coriander oil, angelica seed oil and juniper berry oil either as a mixture of flavoured components for forming an alcoholic solution or when the process is applied sequentially to these individual components and the filtrates subsequently combined.

10. A process as claimed in any preceding claim, wherein the final alcohol concentration is 5-35%, preferably 10-25% by weight.

11. A beverage product comprising at least one ingredient obtainable by a process as claimed in any preceding claim.

## Patentansprüche

1. Eine Verbesserung eines Verfahrens zur Herstellung eines Getränkes oder einer Zutat für ein Getränk aus einem oder mehreren Geschmack aufweisenden Bestandteilen, umfassend ein alkohollösliches Öl, in dem eine alkoholische Lösung des Geschmack aufweisenden Bestandteils (der Geschmack aufweisenden Bestandteile) mit Wasser oder einem Gemisch von Wasser und Alkohol verdünnt wird, um eine Emulsion zu bilden, die zwecks Trennung der Emulsion durch ein statisches Filtersystem filtriert wird, und das Filtrat als das Getränk oder als eine Zutat für ein Getränk erfaßt wird, wobei die besagte Verbesserung den Gebrauch eines statischen Filtersystems umfaßt, einschließlich eines zusammengesetzten Filterbetts, das feste Filtrationshilfsmittel A und B enthält, welche in der Reihenfolge A zuerst und danach B zu verwenden sind, wobei das Filtrationshilfsmittel B dichter ist und feiner filtriert als A, dadurch gekennzeichnet, daß das Filtrationshilfsmittel A Perlit umfaßt, während das Filtrationshilfsmittel B Kieselgur umfaßt.

2. Ein Verfahren nach Anspruch 1, bei dem das Filtrationshilfsmittel A gesintertes Perlit umfaßt.

3. Ein Verfahren nach einem der vorstehenden Ansprüche, bei dem die Emulsion während des Mischens mit niedrigem Schub im Zuge der Verdünnung gebildet wird.

4. Ein Verfahren nach einem der vorstehenden Ansprüche, bei dem die gebildete Emulsion unter Druck durch das Filtersystem gepumpt wird.

5. Ein Verfahren nach einem der vorstehenden Ansprüche, bei dem dem Filtrat nachträglich weiterer Alkohol zugesetzt wird.

6. Ein Verfahren nach einem der vorstehenden Ansprüche, bei dem der Geschmack aufweisende Bestandteil (die Geschmack aufweisenden Bestandteile) aus einem oder mehreren der folgenden Produkte - Obst, Kräuter, Nüsse, Gewürze, Samen oder Beeren - gewonnen wird (werden).

7. Ein Verfahren nach einem der vorstehenden Ansprüche, bei dem der Geschmack aufweisende Bestandteil (die Geschmack aufweisenden Bestandteile) ätherisches oder alkoholextrahiertes Öl (ätherische oder alkoholextrahierte Öle) umfaßt (umfassen).

8. Ein Verfahren nach einem der vorstehenden Ansprüche, bei dem der Geschmack aufweisende Bestandteil (die Geschmack aufweisenden Bestandteile) eines oder mehrere der nachstehenden Produkte umfaßt (umfassen) oder daraus gewonnen wird (werden): Citrusöl, Wacholderbeeren, Walnuß, Pistazien- oder Sesamnüsse, Angelika oder Anissamen, Angelikasamenöl, Anissamenöl, Kümmelöl, Zimtrindenöl, Korianderöl, Fenchelöl, Wacholderbeerenöl, Mandarinenöl, Anisöl, Sesamöl, Walnußöl, Zitronenöl, Orangenöl oder Limetteöl.

9. Ein Verfahren nach einem der Ansprüche 1 bis 7, bei dem der Geschmack aufweisende Bestandteil (die Geschmack aufweisenden Bestandteile) Korianderöl, Angelikasamenöl und Wacholderbeerenöl umfaßt (umfassen) und zwar entweder als ein Gemisch von Geschmack aufweisenden Bestandteilen zwecks Bildung einer alkoholischen Lösung oder indem diese Einzelbestandteile dem Verfahren sequentiell unterzogen und die Filtrate nachträglich vereinigt werden.

10. Ein Verfahren nach einem der vorstehenden Ansprüche, bei dem die Endkonzentration des Alkohols 5-35 % und vorzugsweise 10-25 % nach Gewicht beträgt.

11. Ein Getränkprodukt, umfassend mindestens einen Bestandteil, der mittels des Verfahrens nach einem der vorstehenden Ansprüche gewonnen werden kann.

## Revendications

1. Amélioration dans un procédé de fabrication d'une boisson ou d'un ingrédient pour boisson à partir d'un ou plusieurs composants aromatisés comprenant une huile soluble dans l'alcool dans laquelle une solution alcoolique du ou des composants aromatisés est diluée avec de l'eau ou un mélange eau/alcool pour former une émulsion qui est filtrée à travers un système de filtre statique pour séparer l'émulsion et le filtrat récupéré comme boisson ou ingrédient pour boisson, l'amélioration comprenant l'utilisation d'un système de filtre statique constitué d'un lit filtrant composite comportant des adjuvants de filtration solides A et B devant être utilisés dans l'ordre A puis B, l'adjuvant de filtration B étant plus compact et ayant une action filtrante plus fine que A, caractérisée en ce que l'adjuvant de filtration A comprend de la perlite, et dans laquelle l'adjuvant de filtration B comprend de la diatomite.

2. Procédé selon la Revendication 1, dans lequel l'adjuvant de filtration A comprend de la perlite frittée.

3. Procédé selon l'une quelconque des revendications précédentes, dans lequel l'émulsion est formée tandis qu'elle est mélangée à faible cisaillement pendant la dilution.

4. Procédé selon l'une quelconque des revendications précédentes, dans lequel l'émulsion formée est pompée à travers le système de filtre sous pression.

5. Procédé selon l'une quelconque des revendications précédentes, dans lequel un supplément d'alcool est ajouté par la suite au filtrat.

6. Procédé selon l'une quelconque des revendications précédentes, dans lequel le ou les composants aromatisés sont dérivés de l'une ou plusieurs des sources suivantes : fruit, herbe, noix, épice, graine ou baie.

7. Procédé selon l'une quelconque des revendications précédentes, dans lequel le ou les composants aromatisés comprennent une ou plusieurs huiles essentielles ou extraites par l'alcool.

8. Procédé selon l'une quelconque des revendications précédentes, dans lequel le ou les composants aromatisés comprennent ou sont dérivés d'une ou plusieurs des sources suivantes : huile d'agrume, baies de genièvre, noix, pistaches ou graines de sésame, graines d'angélique ou d'anis, huile de graines d'angélique, huile d'anis, huile de carvi, huile d'écorce de cannelle, huile de coriandre, huile de fenouil, huile de baies de genièvre, huile de mandarine, huile de graine d'anis, huile de sésame, huile de noix, huile de citron, huile d'orange ou huile de citron vert.

9. Procédé selon l'une des Revendications 1 à 7, dans lequel le ou les composants aromatisés comprennent l'huile de coriandre, l'huile de graine d'angélique et l'huile de genièvre, soit sous forme de mélange des composants aromatisés pour former une solution alcoolique, soit lorsque le procédé est appliqué séquentiellement à ces composants individuels et les filtrats combinés par la suite.

10. Procédé selon l'une quelconque des revendications précédentes, dans lequel la concentration finale en alcool est de 5-35%, de préférence 10-25% en poids.

11. Produit pour boisson comprenant au moins un ingrédient pouvant être obtenu par un procédé selon l'une quelconque des revendications précédentes.
